# EUROPEAN PATENT APPLICATION

(11) **EP 2 549 580 A1**
(43) Date of publication of application: **23.01.2013**
(21) Application number: 11756276.9
(22) Date of filing: 15.03.2011
(51) Int. Cl.: H01M 10/48, H01M 2/10, H01M 2/34

(54) **BATTERY SYSTEM**

(30) Priority: 17.03.2010 JP 2010061155
(71) Applicant: MITSUBISHI HEAVY INDUSTRIES, Ltd., TOKYO, Tokyo 108-8215 (JP)
(72) Inventor: GOTO, Mitsufumi, Tokyo 108-8215 (JP); MIURA, Masami, Tokyo 108-8215 (JP)
(74) Representative: Bongiovanni, Simone
(86) International application number: PCT/JP2011/056006
(87) International publication number: WO 2011/115091

(57) **Abstract**

A battery system (1) includes: an electrical cell (2) which is accommodated in each battery accommodation casing (22) so that at least one of first facing side surfaces (51) and (52) in a stacking direction (X) of a stacked structure and at least one of second facing side surfaces (53) and (54) in the direction (Y) lying at right angles to the stacking direction (X) faces the battery accommodation casing wall surface (22a) or the battery accommodation casing partition plate wall surface (23a); separation state detecting devices (24a) and (24b) for detecting a first separation distance (W1) between the first side surfaces (51) and (52) and any one of the wall surfaces (22a) and (23a) and a second separation distance (W2) between the second side surfaces (53) and (54) and any one of the wall surfaces (22a) and (23a); and a control unit that determines that the corresponding secondary battery (2) has an abnormal internal pressure when both the first separation distance (W1) and the second separation distance (W2) become smaller on the basis of the detection result obtained by the separation state detecting devices (24a) and (24b).

## Description

### TECHNICAL FIELD

The present invention relates to a battery system which is formed by plural combinations of electrical cells.
Priority is claimed on Japanese Patent Application No. 2010-061155, filed on March 17, 2010, the content of which is incorporated herein by reference.

### BACKGROUND ART

As a secondary battery which is represented by a lithium ion secondary battery or the like, a stacking type includes a stacked structure which is formed by alternately stacking positive and negative electrode plates, a cell casing which accommodates the stacked structure, an electrolyte which is charged inside the cell casing, and the like. Further, in general, plural secondary batteries are accommodated in a single battery accommodation casing, and plural combinations thereof are used as an assembled battery. Such a secondary battery is degraded due to the repeated charging and discharging operation thereof. Further, when short-circuiting occurs inside the secondary battery, the secondary battery is heated due to a large current which flows thereto, which may lead to a so-called thermal runaway state in which the internal temperature abruptly increases.

For this reason, in order to prevent the degradation state or the thermal runaway state of the existing secondary battery by detecting the thermal runaway phenomenon in advance, a technique has been conducted which measures and monitors a voltage across terminals, an internal resistance, a can temperature, and the like. Further, when the secondary battery is charged and discharged, the stacked structure therein expands due to the charged state, so that the cell casing also expands. Further, when there is an increase in the internal temperature which causes the thermal runaway state, the electrolyte evaporates, so that the internal pressure increases. Even in this case, the cell casing expands. For this reason, there is proposed a technique which measures strain by installing a strain gauge in the cell casing and detects the expansion of the cell casing, thereby detecting the abnormality thereof (for example, see PTL 1).

### Citation List

### Patent Literature

PTL 1; Japanese Unexamined Patent Application, First Publication No. 2003-59484

### DISCLOSURE OF PRESENT INVENTION

### Technical Problem

However, according to the technique of PTL 1, not only the expansion of the cell casing with the normal charging and discharging operation of the secondary battery but also the expansion of the cell casing with the abnormal internal pressure causing the thermal runaway state are detected in the same way. For this reason, for example, when the expansion of the cell casing is monitored by decreasing the threshold value, there is a problem in that the expansion of the cell casing with the normal charging and discharging operation of the secondary battery is also determined as an abnormality. Further, when the expansion of the cell casing is monitored by increasing the threshold value, there is a problem in that the abnormal internal pressure causing the thermal runaway state may not be detected in advance.

The present invention is made in view of the above-described circumstances, and it is an object of the present invention to provide a battery system capable of accurately detecting an abnormal internal pressure of each electrical cell by the expansion of a cell casing.

### Solution to Problem

In order to solve the above-described problems, the present invention proposes the following devices.
According to the present invention, there is provided a battery system including: a substantially box-like battery accommodation casing; an electrical cell that includes a stacked structure formed by stacking a plurality of electrode plates and a cell casing accommodating the stacked structure and is accommodated in the battery accommodation casing so that at least one of first facing side surfaces of the cell casing in the stacking direction of the stacked structure and at least one of second facing side surfaces in a direction lying at right angles to the stacking direction face a battery accommodation casing wall surface or a battery accommodation casing partition plate; separation state detecting devices for respectively detecting a first separation distance between the first side surface and the battery accommodation casing wall surface or the battery accommodation casing partition plate facing the first side surface and a second separation distance between the second side surface and the battery accommodation casing wall surface or the battery accommodation casing partition plate facing the second side surface; and a control unit that determines that the corresponding electrical cell has an abnormal internal pressure when both the first separation distance and the second separation distance become smaller on the basis of the detection result obtained by the separation state detecting devices.

According to this configuration, the separation state detecting devices detects the first separation distance and the second separation distance corresponding to the separation distance between each of the first side surface and the second side surface of the cell casing of each electrical cell and the battery accommodation casing wall surface or the battery accommodation casing partition plate. For this reason, when the cell casing of the electrical cell expands, the detection value of the first separation distance or the second separation distance detected by the separation state detecting devices becomes smaller. Then, the control unit determines that the corresponding electrical cell has an abnormal internal pressure when both the first separation distance and the second separation distance become smaller on the basis of the detection result obtained by the separation state detecting devices. Here, when the stacked structure of the electrical cell expands due to the charging and discharging operation, the stacked structure expands in the stacking direction, so that the expansion of the cell casing is also detected only at the corresponding position, that is, the first side surface. On the other hand, when a certain abnormality occurs inside the electrical cell and the internal pressure thereof increases, the entire cell casing expands due to the internal pressure. For this reason, as described above, since the control unit determines that the corresponding electrical cell has an abnormal internal pressure when both the first separation distance and the second separation distance become smaller, the abnormal internal pressure may be accurately detected without erroneously detecting the expansion of the cell casing with a simple charging and discharging operation.

Further, in the above-described battery system, the separation state detecting devices is preferably a piezoelectric element that is interposed between the first and second side surfaces and the battery accommodation casing wall surface or the battery accommodation casing partition plate facing the side surfaces.
Furthermore, the interposed state mentioned herein indicates a state where the piezoelectric element is disposed between the first side surface or the second side surface and the wall surface facing the side surface, and is not essentially limited to the state where the piezoelectric element is interposed therebetween in a contact state. That is, a gap may be formed therebetween.

According to this configuration, when the cell casing expands, so that the separation distance between the cell casing and the battery accommodation casing wall surface or the battery accommodation casing partition plate is narrowed, the piezoelectric element which is interposed between the cell casing and the battery accommodation casing wall surface or the battery accommodation casing partition plate is compressed and deformed. When this compressed and deformed amount is detected as an electric signal, the first separation distance or the second separation distance may be detected.

Further, in the above-described battery system, the piezoelectric element is preferably attached to the battery accommodation casing wall surface or the battery accommodation casing partition plate.

According to this configuration, since the piezoelectric element is attached to the battery accommodation casing wall surface or the battery accommodation casing partition plate, it is possible to reduce a workload required to attach the piezoelectric element to the electrical cell and easily replace each electrical cell.

Further, in the above-described battery system, the separation state detecting devices preferably includes a light source that allows detection light to pass through a gap formed between the side surfaces and the battery accommodation casing wall surface or the battery accommodation casing partition plate facing the side surfaces from one edge side toward the other edge side in each of the first side surface and the second side surface, and a light amount detector that is installed at the other edge side of each of the first side surface and the second side surface so as to detect the amount of detection light.

According to this configuration, when the cell casing expands, so that the separation distance between the cell casing and the battery accommodation casing wall surface or the battery accommodation casing partition plate is narrowed, the optical path width of the detection light which is emitted from the light source at one edge side toward the other edge side may be narrowed. For this reason, the amount of detection light which is detected by the light amount detector installed at the other edge side becomes smaller, thereby detecting a decrease in the first separation distance or the second separation distance.

Further, in the above-described battery system, the separation state detecting devices is preferably interposed between the light source and the light amount detector so as to be positioned between the corresponding first side surface or the corresponding second side surface and the battery accommodation casing wall surface or the battery accommodation casing partition plate facing the side surface, and preferably includes a light-transmissive member that has a void through which the detection light is transmitted and is able to elastically contract.

According to this configuration, the detection light which is emitted from the light source is detected by the light amount detector after it passes through the void of the light-transmissive member. Here, when the cell casing expands, so that the separation distance between the cell casing and the battery accommodation casing wall surface or the battery accommodation casing partition plate is narrowed, as described above, the optical path width of the detection light is narrowed, and the light-transmissive member elastically contracts, so that the size of the void becomes smaller, thereby interrupting the detection light. For this reason, it is possible to detect a change in the separation distance between the cell casing and the battery accommodation casing wall surface or the battery accommodation casing partition plate with high sensitivity.

### Advantageous Effects of Invention

According to the battery system of the present invention, the abnormal internal pressure of each electrical cell may be accurately detected by the expansion of the cell casing.

### BRIEF DESCRIPTION OF THE DRAWINGS

FIG 1 is a block diagram illustrating an entire high-order system to which a battery system of a first embodiment of the present invention is assembled.
FIG 2 is a partially cutaway perspective view illustrating an entire battery module in the battery system of the first embodiment of the present invention.
FIG 3 is a top cross-sectional view illustrating the internal structure of the battery module in the battery system of the first embodiment of the present invention.
FIG 4 is a cross-sectional view taken along the line A-A of FIG 3.
FIG 5 is a partially cutaway perspective view illustrating an entire electrical cell in the battery system of the first embodiment of the present invention.
FIG 6 is a block diagram specifically illustrating a connection state between a secondary battery and a CMU in the battery system of the first embodiment of the present invention.
FIG 7 is a block diagram specifically illustrating a BMU in the battery system of the first embodiment of the present invention.
FIG 8 is a flowchart illustrating a procedure of determining an abnormal internal pressure in the battery system of the first embodiment of the present invention.
FIG 9 is a diagram illustrating an expansion mode of a cell casing of a secondary battery in the battery system of the first embodiment of the present invention.
FIG 10 is a graph illustrating an example of a detection value which is detected by a first piezoelectric element and a second piezoelectric element in the battery system of the first embodiment of the present invention.
FIG 11 is a graph illustrating an example of a detection value which is detected by the first piezoelectric element and the second piezoelectric element in the battery system of the first embodiment of the present invention.
FIG 12 is a top cross-sectional view illustrating the internal structure of a battery module in a battery system of a second embodiment of the present invention.
FIG 13 is a cross-sectional view taken along the line B-B of FIG 12.
FIG 14 is a block diagram specifically illustrating a connection state between a secondary battery and a CMU in the battery system of the second embodiment of the present invention.
FIG 15 is a flowchart illustrating a procedure of determining an abnormal internal pressure in the battery system of the second embodiment of the present invention.
FIG 16 is a diagram illustrating an expansion mode of a cell casing of the secondary battery in the battery system of the second embodiment of the present invention.
FIG 17 is a diagram illustrating the detection state of a light amount detector when the cell casing of the secondary battery expands in the battery system of the second embodiment of the present invention.
FIG 18 is a graph illustrating an example of a detection value which is detected by a first light amount detector and a second light amount detector in the battery system of the second embodiment of the present invention.
FIG 19 is a graph illustrating another example of a detection value which is detected by the first light amount detector and the second light amount detector in the battery system of the second embodiment of the present invention.
FIG 20 is a top cross-sectional view illustrating the internal structure of a battery module in a battery system of a third embodiment of the present invention.
FIG 21 is a cross-sectional view taken along the line C-C of FIG 20.
FIG 22 is a diagram illustrating an expansion mode of a cell casing of a secondary battery in the battery system of the third embodiment of the present invention.
FIG 23 is a diagram illustrating a detection state in a light amount detector when the cell casing of the secondary battery expands in the battery system of the third embodiment of the present invention.
FIG 24 is a block diagram specifically illustrating a connection state between a secondary battery and a CMU in a battery system of a fourth embodiment of the present invention.
FIG 25 is a diagram specifically illustrating a light-transmissive member in the battery system of the fourth embodiment of the present invention.
FIG 26 is a cross-sectional view taken along the line D-D of FIG 25.

### BEST MODE FOR CARRYING OUT THE PRESENT INVENTION

### (First embodiment)

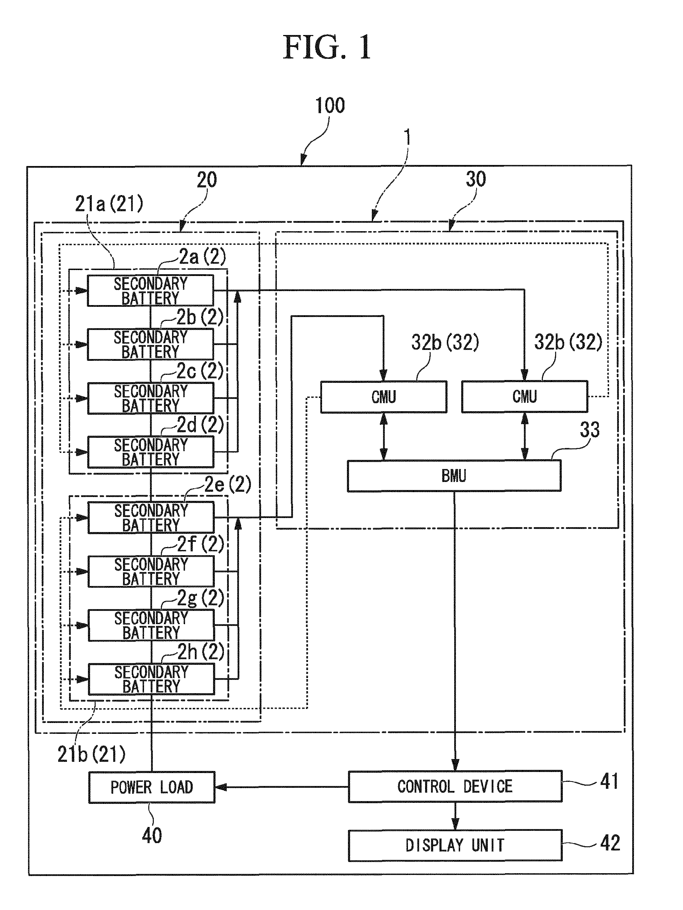

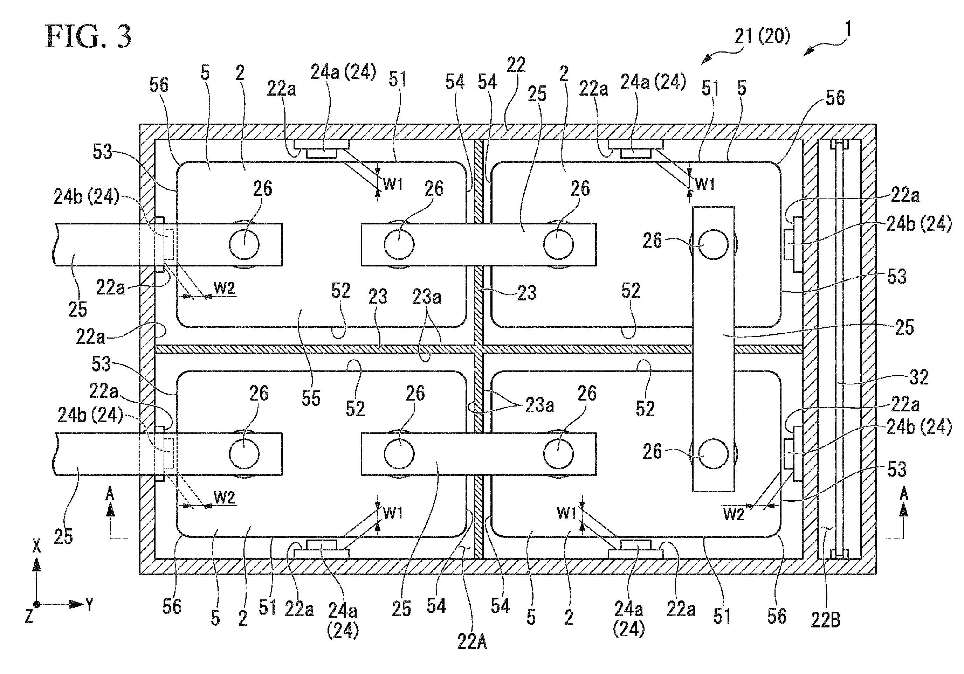

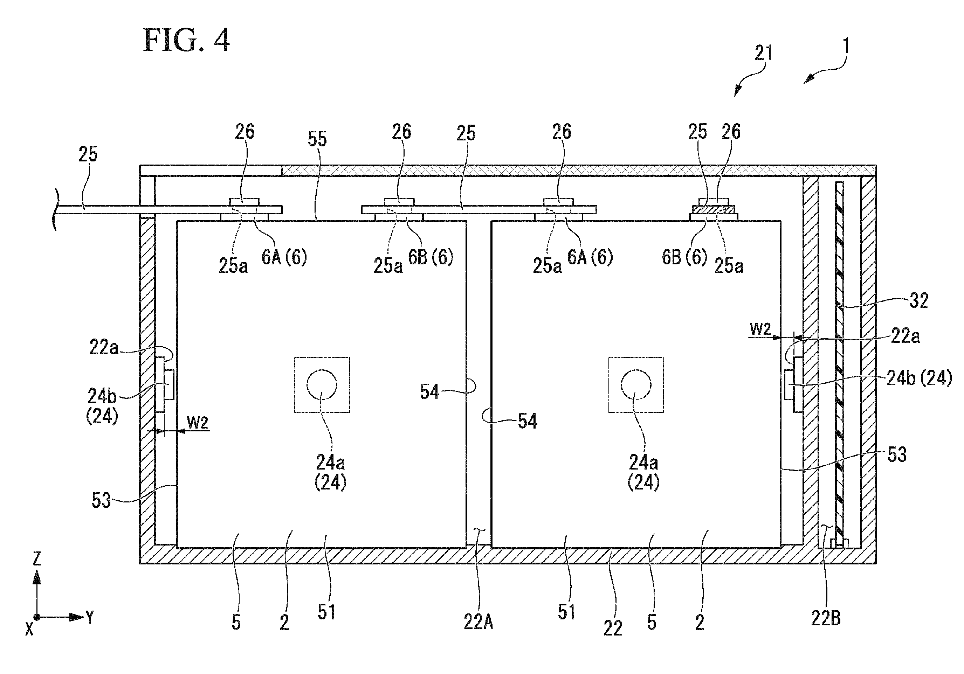

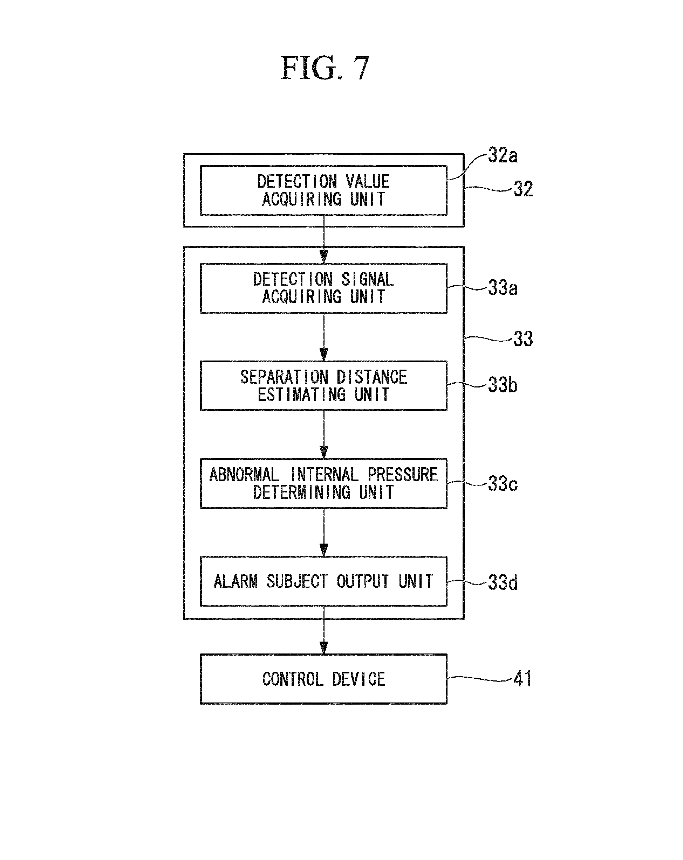

A first embodiment of the present invention will be described by referring to FIGS. 1 to 10. FIGS. 1 to 10 illustrate a battery system 1 of the first embodiment. As shown in FIG 1, the battery system 1 of the embodiment includes: an assembled battery 20 which is formed by secondary batteries 2 corresponding to plural electrical cells and a BMS (Battery Management System) 30 which is a control unit monitoring and controlling the assembled battery 20. In the embodiment, the assembled battery 20 includes plural battery modules 21 which are formed by plural secondary batteries 2. Specifically, the assembled battery includes two battery modules 21a and 21b. Then, a battery module 21a is formed by four secondary batteries 2 (2a, 2b, 2c, and 2d). In the same way, the battery module 21b is formed by four secondary batteries 2 (2e, 2f, 2g, and 2h). Then, the assembled battery 20 is connected to a power load 40, and may be charged and discharged. Further, the BMS 30 is connected to a control device 41 of a high-order system 100 on which the battery system 1 serving as a power supply is mounted. The BMS may input and output various signals, output information relating to each secondary battery 2 to the control device 41, and display the information relating to the secondary battery 2 on a display unit 42 through the control device 41 so as to inform a user of this information.

As the high-order system 100, an electric vehicle is exemplified. In this case, the power load 40 corresponds to an electric motor connected to a vehicle wheel (not shown) or a power converter such as an inverter, and the control device 41 controls the operation of the power converter such as the inverter or the number of rotations of the electric motor. The power load 40 may be an electric motor which drives a wiper or the like. Furthermore, the high-order system 100 may be not only the electric vehicle, but also for example, an industrial vehicle such as a forklift, a train, or a moving vehicle such as an airplane or a ship in which a propeller or a screw is connected to an electric motor serving as the power load 40. Furthermore, the high-order system may be, for example, a stationary system such as a home electric storage system or a system interconnection facilitating electric storage system which is combined with a natural energy generating facility such as a windmill or a solar power generating system. That is, the high-order system is concerned with a general system that uses the charged and discharged secondary battery 2.

Next, the assembled battery 20 and the BMS 30 which constitute the battery system 1 will be specifically described.
As shown in FIG 1, the BMS 30 includes: a CMU (Cell Monitor Unit) 32 which monitors the state of each secondary battery 2 of the assembled battery 20 and a BMU (Battery Management Unit) 33 which intensively manages the plural secondary batteries 2 on the basis of the signal output from the CMU 32 and which receives and transmits a signal from and to the control device 41 of the high-order system 100. As the detection value which is monitored by the CMU 32, for example, a separation distance between each secondary battery 2 and a battery accommodation casing 22 on the outside thereof may be exemplified in addition to a voltage across terminals, a can potential, an internal resistance, a can temperature, and the like. Then, in the embodiment, the BMU 33 detects the abnormal internal pressure of each secondary battery 2 on the basis of the input separation distance. This will be described later in detail.

Further, the CMU 32 is configured to perform a process in which the monitored detection value is output to the BMU 33. Here, the CMU 32 is installed so as to correspond to each battery module 21, and in the embodiment, CMUs 32a and 32b are installed so as to correspond to two battery modules 21a and 21b.

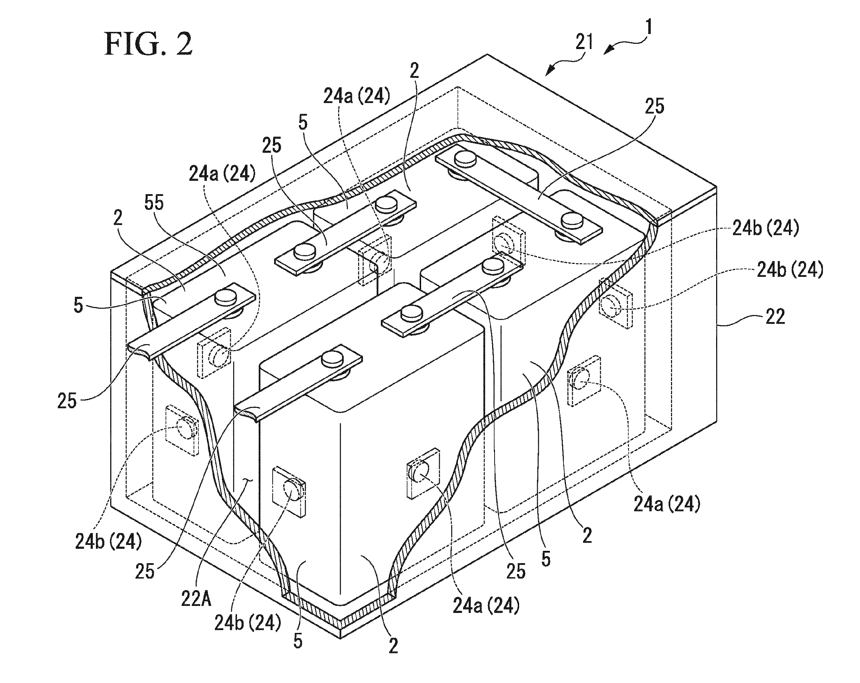

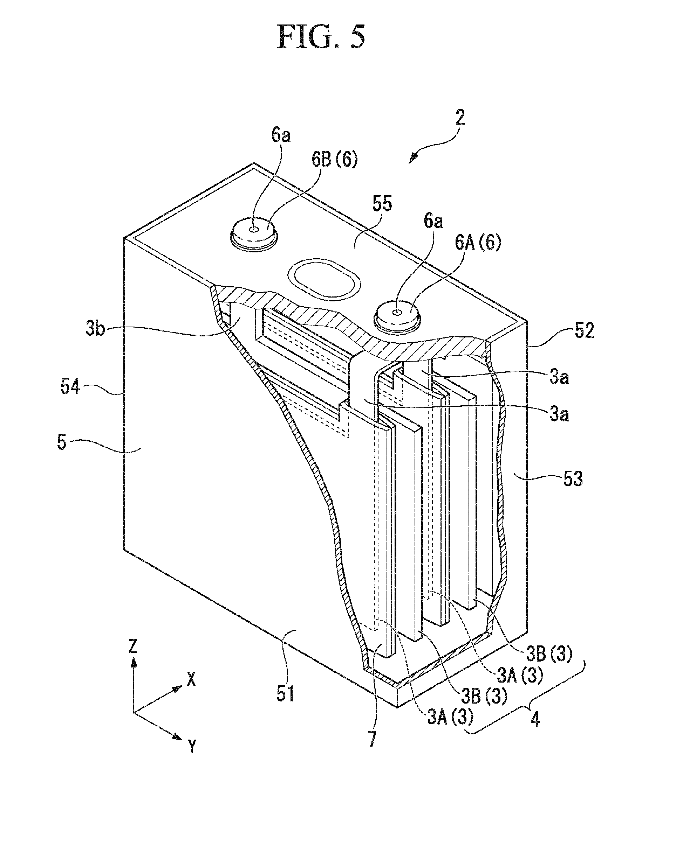

As shown in FIGS. 2 to 4, each battery module 21 which constitutes the assembled battery 20 includes: four secondary batteries 2; a substantially box-like battery accommodation casing 22 which accommodates the secondary batteries 2; a battery accommodation casing partition plate 23; and separation state detecting devices 24 for detecting the separation distance between the secondary battery 2 and the battery accommodation casing 22 and the separation distance between the secondary battery 2 and the battery accommodation casing partition plate 23. As shown in FIG 5, each secondary battery 2 includes: a stacked structure 4 which is formed by stacking plural electrode plates 3; a cell casing 5 which accommodates the stacked structure 4; and an electrode terminal 6 which is installed in the cell casing 5.
Then, an electrolyte is injected into the cell casing 5. The electrode plate 3 includes a positive electrode plate 3A and a negative electrode plate 3B, and the positive electrode plate 3A and the negative electrode plate 3B are alternately stacked. Furthermore, the positive electrode plate 3A is coated by a separator 7, so that the positive electrode plate 3A and the negative electrode plate 3B are insulated from each other. Further, the cell casing 5 is formed in a substantially rectangular parallelepiped shape. Then, the stacked structure 4 is accommodated inside the cell casing 5 so that the stacking direction X matches the direction where first side surfaces 51 and 52 of the cell casing 5 face each other. Furthermore, the side surfaces which face each other in the direction Y perpendicular to the stacking direction X are referred to as second side surfaces 53 and 54. Further, the electrode terminal 6 includes a positive electrode terminal 6A and a negative electrode terminal 6B which are respectively installed in an upper end surface 55 of the cell casing 5 so as to protrude in the terminal protruding direction Z that lies at right angles to the stacking direction X and is perpendicular to the upper end surface 55. Further, the positive electrode plate 3A and the negative electrode plate 3B are respectively provided with a positive electrode tab 3a and a negative electrode tab 3b which protrude in the terminal protruding direction Z and are electrically connected to the corresponding positive electrode terminal 6A or the corresponding negative electrode terminal 6B inside the cell casing 5. Further, the upper end surfaces of the positive electrode terminal 6A and the negative electrode terminal 6B are respectively provided with screw holes 6a.

As shown in FIGS. 2 to 4, the battery accommodation casing 22 is formed in a substantially rectangular parallelepiped shape, and includes a battery accommodating portion 22A which accommodates the secondary battery 2 and a substrate accommodating portion 22B which accommodates the CMU 32. Here, four secondary batteries 2 are arranged according to the matrix of two by two so that one of the first side surfaces 51 and 52 facing each other faces the battery accommodation casing wall surface 22a of the battery accommodation casing 22 or the battery accommodation casing partition plate wall surface 23a and one of the second side surfaces 53 and 54 facing each other faces the battery accommodation casing wall surface 22a of the battery accommodation casing 22 or the battery accommodation casing partition plate wall surface 23a in the same way.

Further, a bus-bar 25 is connected between the respective electrode terminals 6 of four secondary batteries 2 so that they are connected in series to each other. Specifically, one end of the bus-bar 25 is connected to the positive electrode terminal 6A of one secondary battery 2, and the other end thereof is connected to the negative electrode terminal 6B of the other secondary battery 2. Both ends of the bus-bar 25 are provided with penetration holes 25a, and a fixation bolt 26 is threaded into a screw hole 6a of the corresponding electrode terminal 6 through the penetration hole 25a, so that the bus-bar 25 is connected by interposing the bus-bar 25 between the fixation bolt 26 and the electrode terminal 6. Further, in the embodiment, four secondary batteries 2 are connected to each other in a U-shape so that the positive and negative electrode drawn portions are formed at one side surface of the battery accommodation casing 22, and the bus-bar 25 which is connected to two secondary batteries 2 and serves as both ends for the connection in series protrudes to the outside of the battery accommodation casing 22 so that it forms an electrode drawn portion.

Further, each separation state detecting devices 24 is formed by a piezoelectric element which is interposed between the battery accommodation casing wall surface 22a and the first side surface 51 and a piezoelectric element which is interposed between the battery accommodation casing wall surface 22a and the second side surface 53 or a piezoelectric element which is interposed between the battery accommodation casing partition plate wall surface 23a and the first side surface 52 and a piezoelectric element which is interposed between the battery accommodation casing partition plate wall surface 23a and the second side surface 54. Specifically, the piezoelectric element which constitutes the separation state detecting devices 24 is attached to the battery accommodation casing wall surface 22a or the battery accommodation casing partition plate wall surface 23a at a position which is a substantial center of the first side surfaces 51 and 52 and the second side surfaces 53 and 54. Here, the piezoelectric element which corresponds to the first side surfaces 51 and 52 is referred to as a first piezoelectric element 24a, and the piezoelectric element which corresponds to the second side surfaces 53 and 54 is referred to as a second piezoelectric element 24b. In the embodiment, a small gap is set to be formed between the first side surfaces 51 and 52 or the second side surfaces 53 and 54 which respectively correspond to the first piezoelectric element 24a and the second piezoelectric element 24b while the cell casing 5 does not expand.

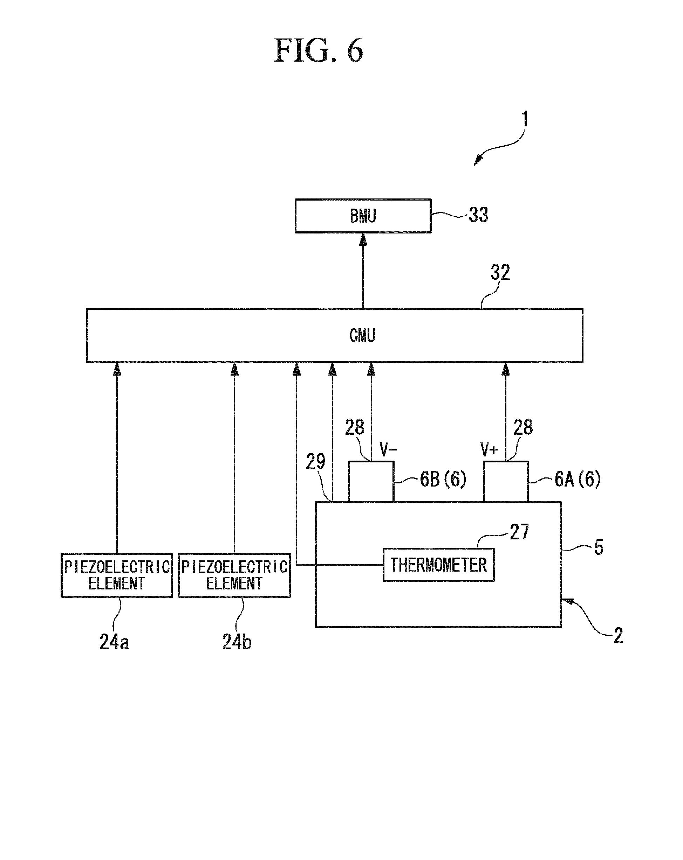

Further, as shown in FIG 6, the inside of the battery accommodation casing 22 is equipped with a temperature measuring terminal 27 which measures the temperature of the cell casing 5 so as to correspond to each secondary battery 2; a first voltage measuring terminal 28 which measures a voltage across terminals of the positive electrode terminal 6A and the negative electrode terminal 6B; and a second voltage measuring terminal 29 which measures a can potential corresponding to a difference in potential between the cell casing 5 and the positive electrode terminal 6A. Then, the detection signals which are obtained from the first piezoelectric element 24a and the second piezoelectric element 24b of the separation state detecting devices 24, the temperature measuring terminal 27, the first voltage measuring terminal 28, and the second voltage measuring terminal 29 are measured by the CMU 32. The CMU 32 is connected to the first piezoelectric element 24a and the second piezoelectric element 24b corresponding to each secondary battery 2, the temperature measuring terminal 27, the first voltage measuring terminal 28, and the second voltage measuring terminal 29 through other signal lines, specifies the secondary battery 2 corresponding to the detection value input from the signal lines on the basis of the signal receiving lines, and outputs information of the ID and the detection value of the secondary battery 2 to the BMU 33.

Then, the BMU 33 monitors the state of the corresponding secondary battery 2 on the basis of various received detection values. In particular, in the embodiment, the separation distance between the secondary battery 2 and the battery accommodation casing wall surface 22a or the battery accommodation casing partition plate wall surface 23a is acquired on the basis of the detection signals which are output from the first piezoelectric element 24a and the second piezoelectric element 24b serving as the separation state detecting devices 24, and the occurrence of the abnormal internal pressure is determined on the basis of the acquired separation distance. Here, the separation distance between the battery accommodation casing wall surface 22a and the first side surface 51 or the battery accommodation casing partition plate wall surface 23a and the first side surface 52 which is detected by the first piezoelectric element 24a is referred to as a first separation distance W1, and the separation distance between the battery accommodation casing wall surface 22a and the second side surface 53 or the separation distance between the battery accommodation casing partition plate wall surface 23a and the second side surface 54 which is detected by the second piezoelectric element 24b is referred to as a second separation distance W2.

Specifically, the BMU 33 includes: a detection signal acquiring unit 33a which acquires a detection signal corresponding to each secondary battery 2 from each CMU 32; a separation distance estimating unit 33b which estimates the separation distance between the secondary battery 2 and the battery accommodation casing wall surface 22a or the battery accommodation casing partition plate wall surface 23a on the basis of the detection signal from the first piezoelectric element 24a and the second piezoelectric element 24b among the signals obtained by the detection signal acquiring unit 33a; an abnormal internal pressure determining unit 33c which determines the occurrence of the abnormal internal pressure on the basis of the estimation result in the separation distance estimating unit 33b; and an alarm subject output unit 33d which outputs information of the secondary battery 2 corresponding to an alarm subj ect on the basis of the determination result in the abnormal internal pressure determining unit 33c to the control device 41.

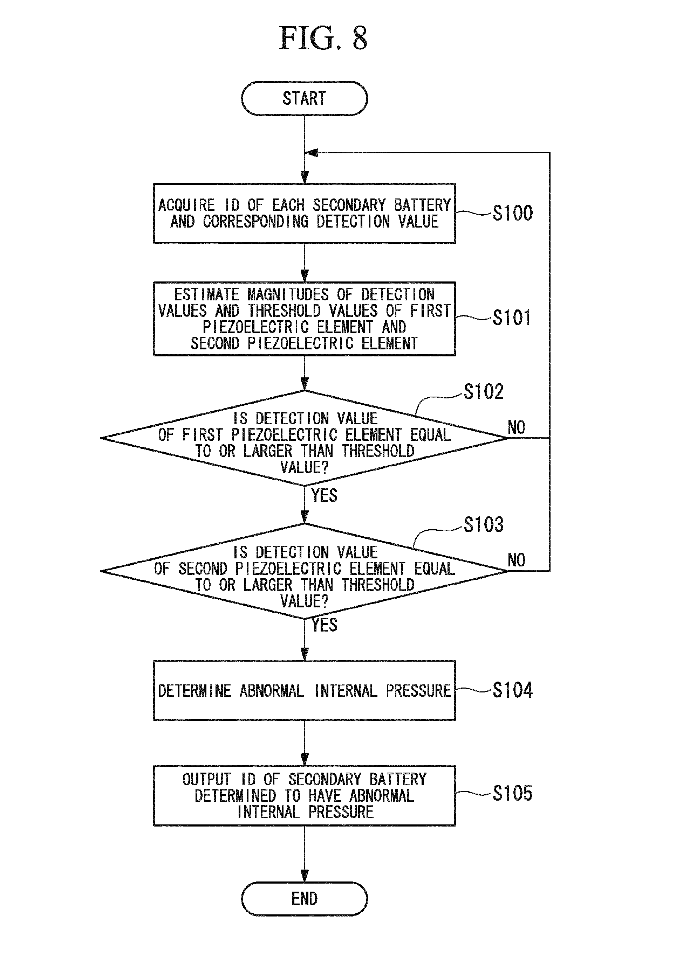

Hereinafter, the specific procedure of determining the abnormal internal pressure which is performed by the respective constituents of the BMU 33 will be described by referring to the flowchart shown in FIG 8. As shown in FIG 8, first, the detection signal acquiring unit 33a acquires IDs of plural secondary batteries 2 constituting the assembled battery 20 and the corresponding detection value, and outputs a result in which the detection values obtained from the first piezoelectric element 24a and the second piezoelectric element 24b are respectively correlated to the IDs of the secondary batteries 2 to the separation distance estimating unit 33b (step S100).

Next, the separation distance estimating unit 33b estimates the first separation distance W1 and the second separation distance W2 for each secondary battery 2. Specifically, it is estimated whether the detection values of the first piezoelectric element 24a and the second piezoelectric element 24b of the ID of the same secondary battery 2 are equal to or larger than a predetermined threshold value, and the estimation result is output to the abnormal internal pressure determining unit 33c (step S101). When the cell casing 5 expands, so that the separation distance between each side surface and the battery accommodation casing wall surface 22a or the battery accommodation casing partition plate wall surface 23a becomes smaller, the first piezoelectric element 24a and the second piezoelectric element 24b are compressed and deformed between the first side surfaces 51 and 52 or the second side surfaces 53 and 54 of the cell casing 5 and the battery accommodation casing wall surface 22a or the battery accommodation casing partition plate wall surface 23a, and the strain is output as a detection value. For this reason, the state where the detection value is equal to or larger than the threshold value indicates a state where the piezoelectric element is compressed and deformed to an extent equal to or larger than the strain corresponding to the threshold value, in other words, the first side surfaces 51 and 52 or the second side surfaces 53 and 54 of the cell casing 5 are deformed outward in a convex shape toward the battery accommodation casing wall surface 22a or the battery accommodation casing partition plate wall surface 23a.

Then, the abnormal internal pressure determining unit 33c first refers to the estimation result for the first piezoelectric element 24a, and determines whether the detection value of the first piezoelectric element 24a is equal to or higher than the threshold value (step S102). Then, when the detection value is smaller than the threshold value (NO), that is, the first separation distance W1 is larger than a predetermined value corresponding to the threshold value, the abnormal internal pressure determining unit 33c determines that the internal pressure is normal, and moves the current process to step S 100 so as to perform the process from step S100 again on the basis of the newly received detection signal. Further, when the detection value of the first piezoelectric element 24a is equal to or larger than the threshold value, that is, the first separation distance W1 is equal to or smaller than a predetermined value corresponding to the threshold value, the abnormal internal pressure determining unit refers to the estimation result relating to the second piezoelectric element 24b, and determines whether the detection value of the second piezoelectric element 24b is equal to or larger than the threshold value (step S103). Then, when the detection value is smaller than the threshold value (NO), that is, the second separation distance is larger than a predetermined value corresponding to the threshold value, the abnormal internal pressure determining unit 33c determines that the internal pressure is normal and moves the current process to step S100 so as to perform the process from step S100 again on the basis of the newly received detection signal. Further, when the detection value of the second piezoelectric element 24b is equal to or larger than the threshold value, that is, the second separation distance W2 as well as the first separation distance W1 are equal to or smaller than a predetermined value corresponding to the threshold value, the abnormal internal pressure determining unit determines that the abnormal internal pressure occurs, and outputs the ID of the corresponding secondary battery 2 to the alarm subject output unit 33d (step S104).

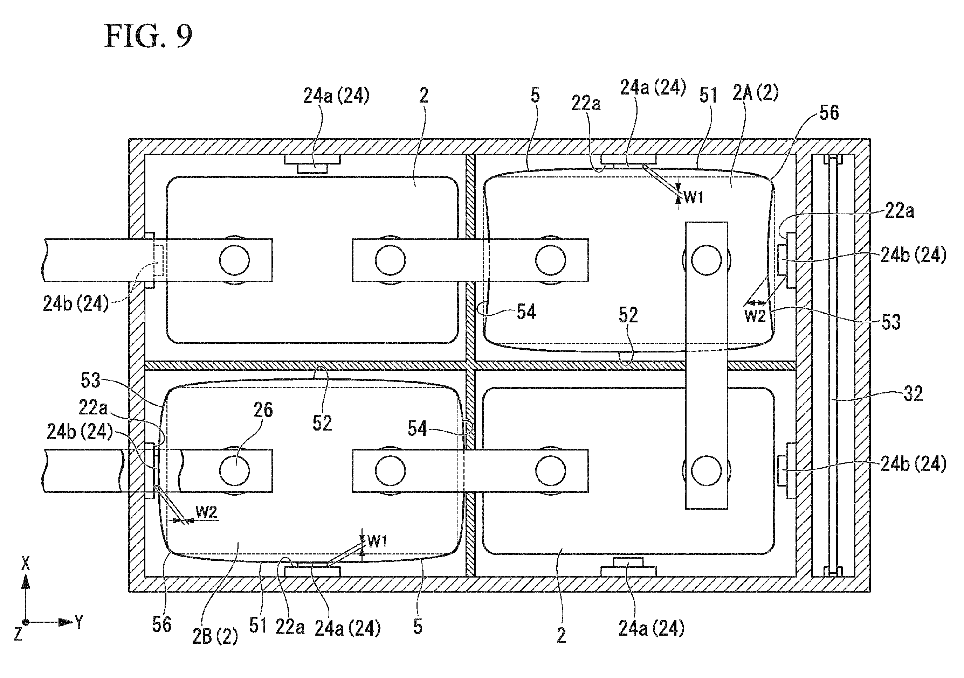

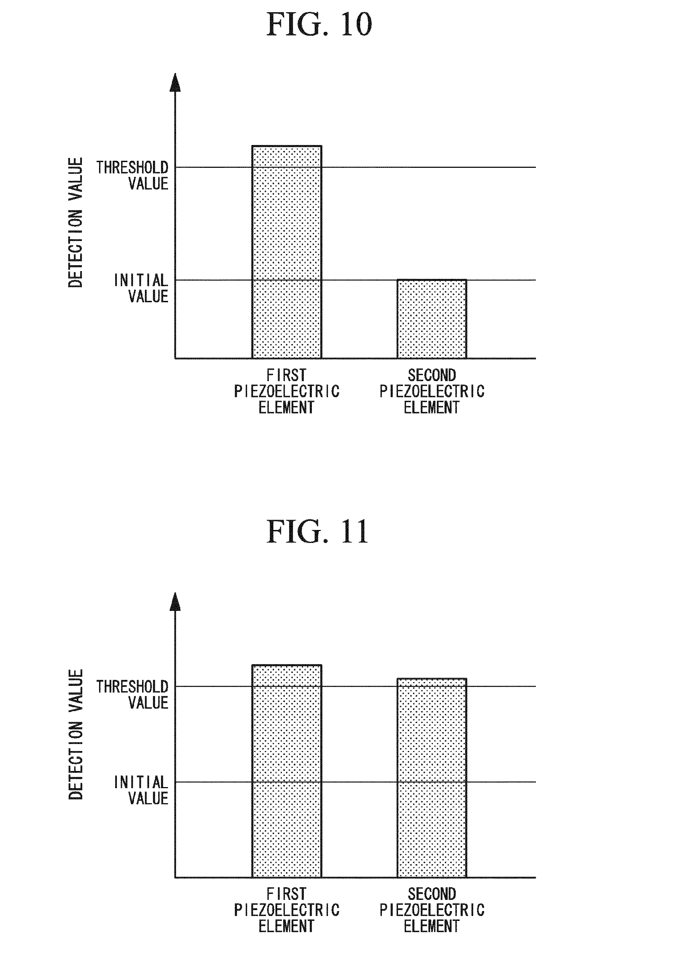

Here, when the secondary battery 2A is charged in a normal state as shown in FIG 9, the stacked structure 4 expands in the stacking direction X with the charging operation, and hence in the cell casing 5, the first side surfaces 51 and 52 are deformed outward in a convex shape in the stacking direction X. On the other hand, since the second side surfaces 53 and 54 are arranged in the direction Y which lies at right angles to the stacking direction X, the second side surfaces do not expand with the expansion of the stacked structure 4, and are deformed in a concave shape due to the influence of the first side surfaces 51 and 52 which are strongly bonded at a corner portion 56 and are deformed in a convex shape. For this reason, as shown in FIG 10, when the detection value which is obtained by the first piezoelectric element 24a is equal to or larger than the threshold value and the detection value which is obtained by the second piezoelectric element 24b is smaller than the threshold value, it may be determined that the cell casing 5 expands due to the normal charging and discharging operation. On the other hand, when the internal pressure of the secondary battery 2B increases as shown in FIG 9, the cell casing 5 expands, but the internal pressure equally acts on the first side surfaces 51 and 52 and the second side surfaces 53 and 54, so that any side thereof is deformed outward in a convex shape. For this reason, as shown in FIG 11, when the detection values which are obtained by the first piezoelectric element 24a and the second piezoelectric element 24b are both equal to or larger than the threshold value, it may be determined that the internal pressure increases and the abnormal internal pressure occurs. Furthermore, when the abnormal internal pressure occurs in this way, the deformation caused by the expansion of the stacked structure 4 also occurs.

Next, the alarm subject output unit 33d outputs the input ID of the secondary battery 2 as a digital signal to the control device 41 (step S105). Then, the control device 41 acquires the ID of the corresponding secondary battery 2 on the basis of the received digital signal, and displays the ID on the display unit 42 so that a user recognizes the abnormal secondary battery 2.

As described above, in the battery system 1 of the embodiment, the first separation distance W1 and the second separation distance W2 between the first side surfaces 51 and 52 and the second side surfaces 53 and 54 and the battery accommodation casing wall surface 22a or the battery accommodation casing partition plate wall surface 23a may be detected by the first piezoelectric element 24a and the second piezoelectric element 24b serving as the separation state detecting devices 24, and the deformation state of the first side surfaces 51 and 52 and the second side surfaces 53 and 54 may be estimated on the basis of the detection result. Then, since the BMU 33 determines that the corresponding secondary battery 2 has an abnormal internal pressure when both the first separation distance W1 and the second separation distance W2 become smaller, the abnormal internal pressure may be accurately detected without erroneously detecting the expansion of the cell casing 5 with a simple charging and discharging operation.

Further, in the embodiment, the first piezoelectric element 24a and the second piezoelectric element 24b are attached to the battery accommodation casing wall surface 22a or the battery accommodation casing partition plate wall surface 23 a instead of the secondary battery 2. For this reason, the secondary battery 2 needs to be equipped with not only wirings for the first piezoelectric element 24a and the second piezoelectric element 24b, but also wirings from the first piezoelectric element 24a and the second piezoelectric element 24b to the CMU 32, and the piezoelectric elements or the wirings do not disturb the replacement or the like of the secondary battery 2. Further, it is possible to prevent the piezoelectric element from being separated from the attachment position due to the weak adhesiveness thereof with the expansion and contraction or a change in temperature of the secondary battery 2.

Furthermore, in the above-described embodiment, the first piezoelectric element 24a and the second piezoelectric element 24b are installed so as to have a small gap between the piezoelectric elements and the corresponding first side surfaces 51 and 52 or the corresponding second side surfaces 53 and 54 while no expansion occurs in the cell casing 5, but the present invention is not limited thereto. For example, the piezoelectric element needs to be interposed between the side surface and the battery accommodation casing wall surface or the battery accommodation casing partition plate. In this case, the first piezoelectric element 24a and the second piezoelectric element 24b may output a constant detection value even in the initial state, and the first separation distance W1 and the second separation distance W2 may be estimated by subtracting the detection value at the initial state from the current separation distances. Further, in the description above, the threshold value which is used for estimating each of the detection value of the first piezoelectric element 24a and the detection value of the second piezoelectric element 24b is the same, but the present invention is not limited thereto. When the first separation distance W1 and the second separation distance W2 are different while the cell casing 5 does not expand, the threshold values of both detection values may be different from each other.

Further, in the above-described embodiment, the abnormality (the abnormal internal pressure) is determined only when the detection value obtained by the second piezoelectric element 24b is equal to or larger than the threshold value, but the present invention is not limited thereto. Furthermore, for example, when a limited value which is larger than the threshold value is provided and the detection value obtained by the first piezoelectric element 24a is equal to or larger than the limited value, the abnormality may be determined regardless of the detection value obtained by the second piezoelectric element 24b. With such a configuration, even when the stacked structure 4 extremely expands due to a certain reason, the abnormality may be informed through the display unit 42.

Further, the battery system 1 may include number-of-times counting devices for counting the number of times when the detection value obtained by the first piezoelectric element 24a is equal to or larger than the threshold value. Then, when the number of times counted by the number-of-times counting devices is equal to or larger than a predetermined number of times, the current state is determined as a fatigue limit due to the repeated expansion and contraction of the cell casing 5 with the charging and discharging operation, which may be informed as an abnormality through the display unit 42.

### (Second embodiment)

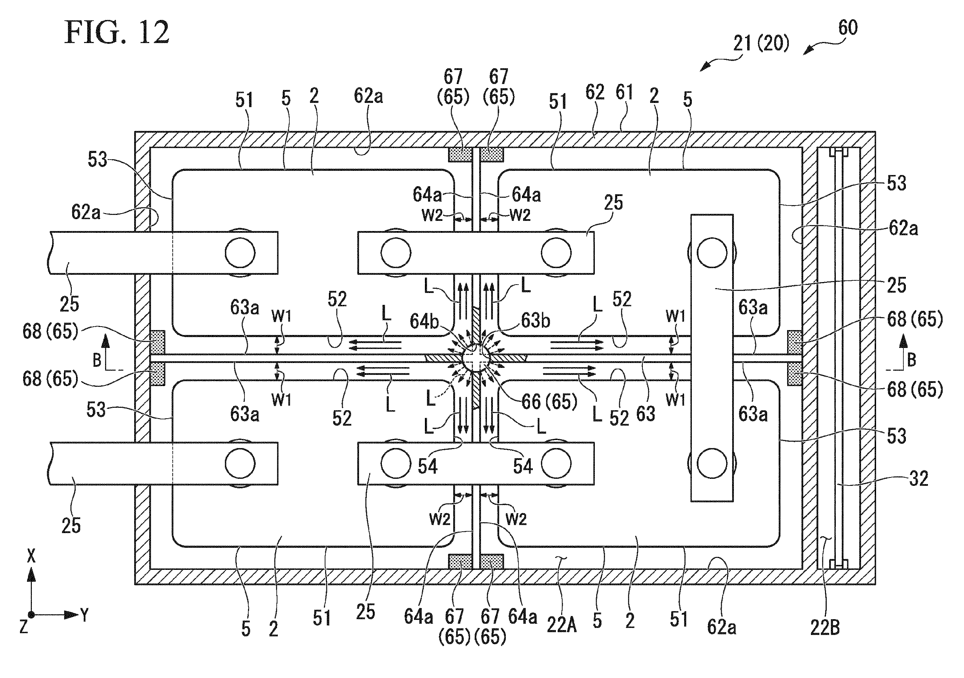

Next, a second embodiment of the present invention will be described. FIGS. 12 to 19 illustrate the second embodiment of the present invention. Furthermore, in the embodiment, the same reference signs will be given to the same constituents as those of the above-described embodiment, and the description thereof will not be repeated.

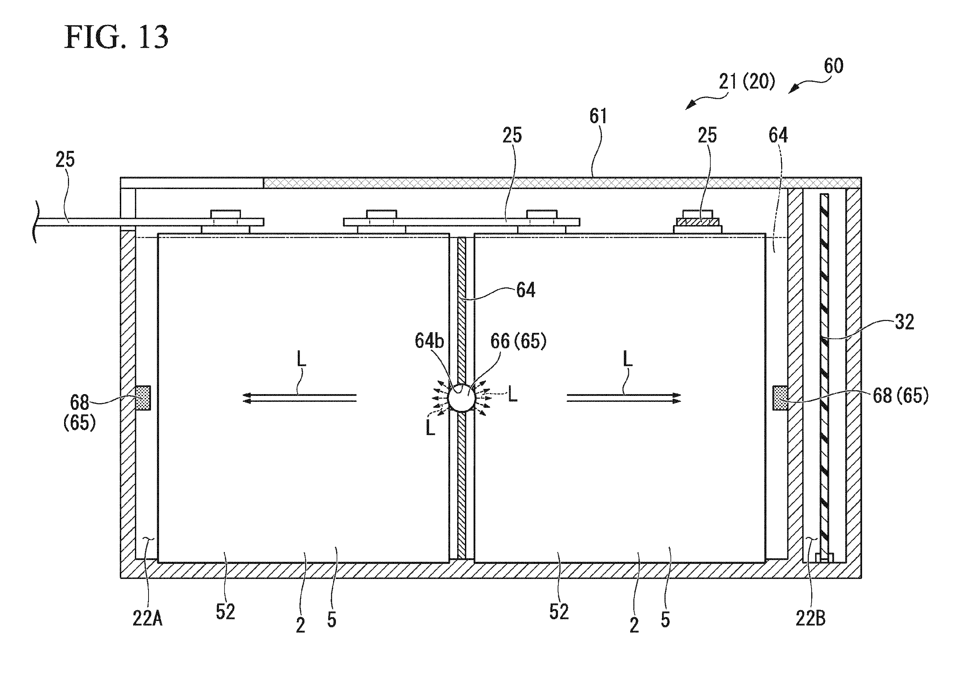

As shown in FIGS. 12 and 13, in a battery system 60 of the embodiment, the battery accommodation casing 22 of the assembled battery 20 includes a partition plate 23 which divides the secondary batteries 2 inside the battery accommodation casing 22. Even in the embodiment, since the secondary batteries 2 are arranged according to the matrix of two by two, the partition plates 23 which divide the secondary batteries 2 are provided along the stacking direction X of the secondary battery 2 and the direction Y lying at right angles to the stacking direction X so as to intersect with each other at the center. Accordingly, in each secondary battery 2, one first side surface 51 faces the battery accommodation casing wall surface 22a, and the other first side surface 52 faces the battery accommodation casing partition plate wall surface 23 a. In the same way, in each secondary battery 2, one second side surface 53 faces the battery accommodation casing wall surface 22a, and the other second side surface 54 faces the battery accommodation casing partition plate wall surface 23a. Further, a gap is formed between each side surface and each battery accommodation casing wall surface 22a or each battery accommodation casing partition plate wall surface 23a so that at least the cell casing 5 of the secondary battery 2 expands due to the general charging and discharging operation so that the cell casing does not come into contact with each battery accommodation casing wall surface 22a and each battery accommodation casing partition plate wall surface 23a.

In the embodiment, separation state detecting devices 65 is configured to detect the separation distances between the first side surface 52, the second side surfaces 53 and 54, and the battery accommodation casing partition plate wall surface 23a in each secondary battery 2 as the first separation distance W1 and the second separation distance W2.
Specifically, the separation state detecting devices 65 includes: a light source 66 which allows detection light L to be transmitted through the gap; and a first light amount detector 67 and a second light amount detector 68 which detect the amount of detection light L output from the light source 66 and transmitted through the gap. Here, in a position where the battery accommodation casing partition plates 23 intersect with each other, that is, the substantial center of the arrangement of the secondary batteries 2, the light source 66 is fitted to a position corresponding to the substantial center of the height direction Z of each secondary battery 2.

Further, the first light amount detector 67 and the second light amount detector 68 respectively correspond to the first side surface 52 and the second side surface 54 of each secondary battery 2, and are attached to the battery accommodation casing wall surface 22a corresponding to the other edge on the opposite side of one edge equipped with the light source 66. For this reason, the detection light L which is emitted from the light source 66 is radiated to a gap between the first side surface 52, the second side surface 54, and the battery accommodation casing partition plate wall surface 23a from one edge side of the first side surface 52 and the second side surface 54 of each secondary battery 2 toward the other edge side, thereby detecting the detection light in the first light amount detector 67 and the second light amount detector 68.

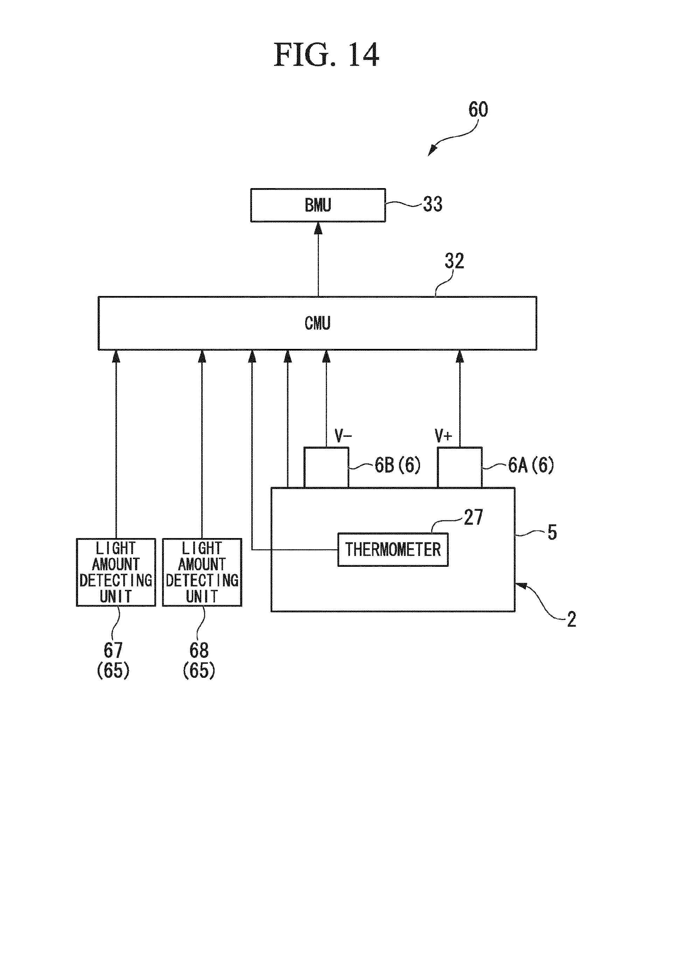

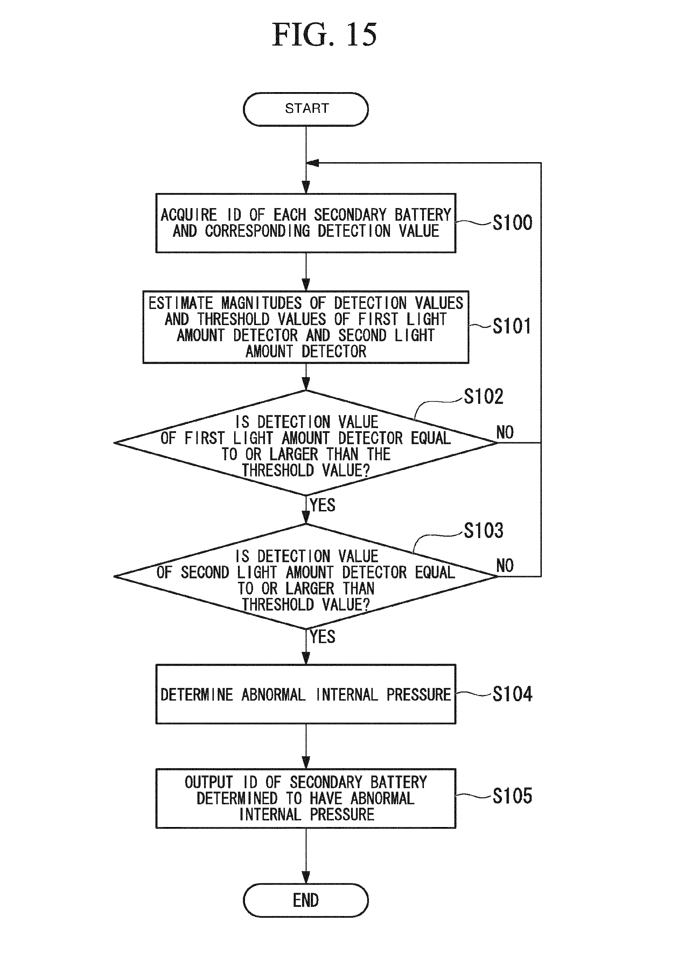

Then, in the embodiment, as shown in FIG 14, instead of the piezoelectric element, the light amount which is detected by each of the first light amount detector 67 and the second light amount detector 68 is output as a detection value to the CMU 32. Then, the detection value is output from the CMU 32 to the BMU 33, and according to the determination procedure shown in FIG 15, the abnormal internal pressure of each secondary battery 2 is determined. That is, as shown in FIG 15, first, the detection signal acquiring unit 33a acquires the detection value corresponding to the IDs of the plural secondary batteries 2 constituting the assembled battery 20, and outputs a result in which the detection value obtained from each of the first light amount detector 67 and the second light amount detector 68 is correlated to the ID of the secondary battery 2 to the separation distance estimating unit 33b (step S100).

Next, the separation distance estimating unit 33b estimates the first separation distance W1 and the second separation distance W2 for each secondary battery 2. Specifically, the separation distance estimating unit estimates whether the detection values of the first light amount detector 67 and the second light amount detector 68 of the ID of the same secondary battery 2 is equal to or smaller than a predetermined threshold value, and outputs the estimation result to the abnormal internal pressure determining unit 33c (step S101). With regard to the detected amount the first light amount detector 67 and the second light amount detector 68, when the cell casing 5 expands, so that the separation distance between each side surface and the battery accommodation casing wall surface 22a or the battery accommodation casing partition plate wall surface 23a becomes smaller, the detection light L emitted from the light source 66 is limited, and the detected light amount becomes smaller. For this reason, the state where the detected light amount is equal to or smaller than the threshold value indicates a state where the corresponding first side surface 51 or the corresponding second side surface 53 of the cell casing 5 is deformed outward in a convex shape toward the battery accommodation casing partition plate wall surface 23a.

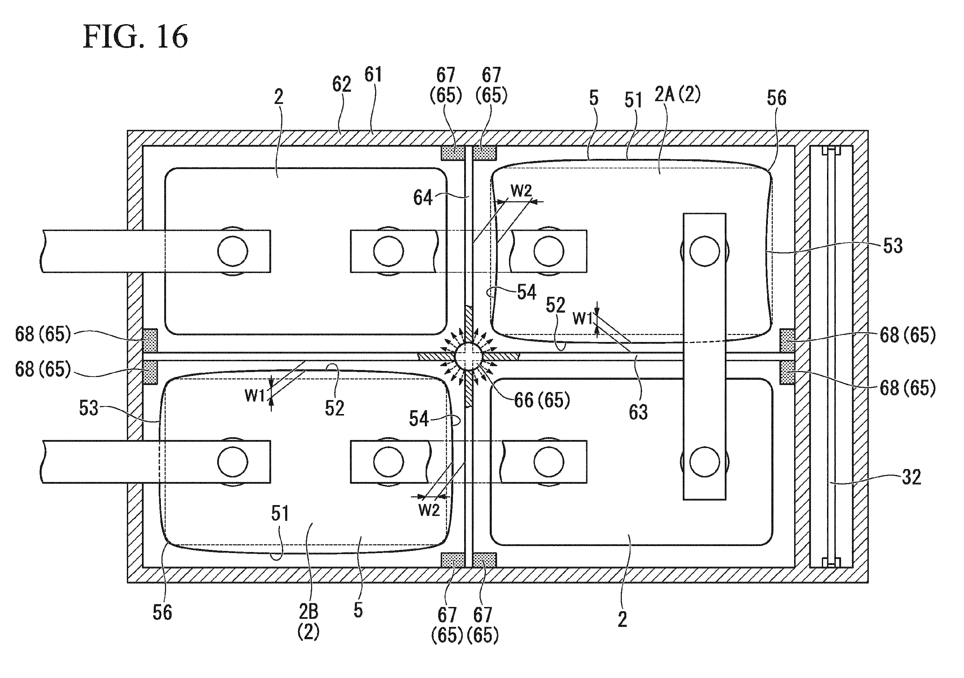

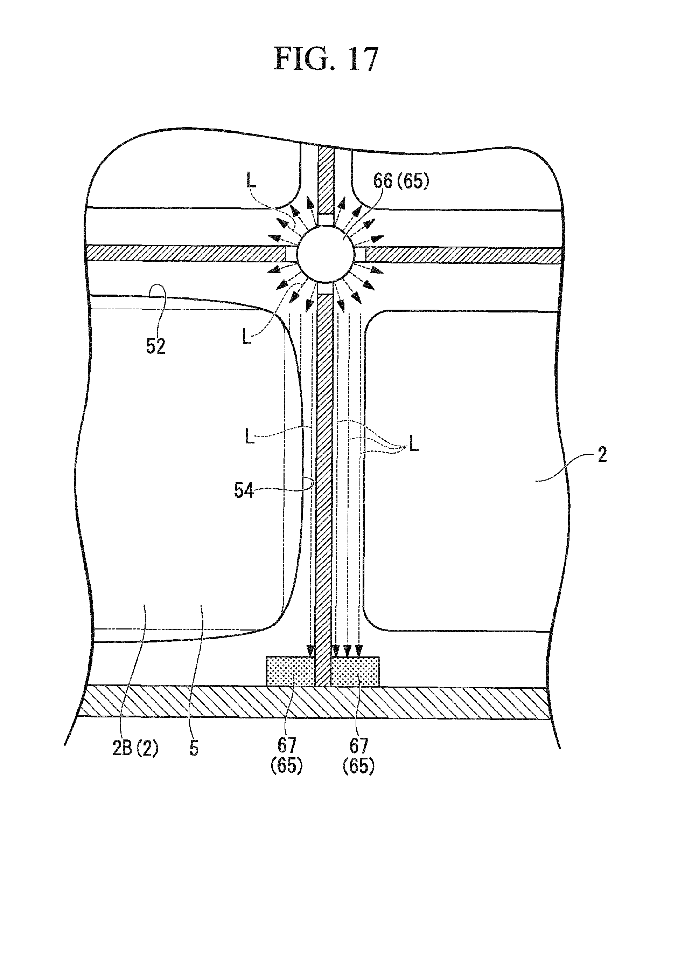

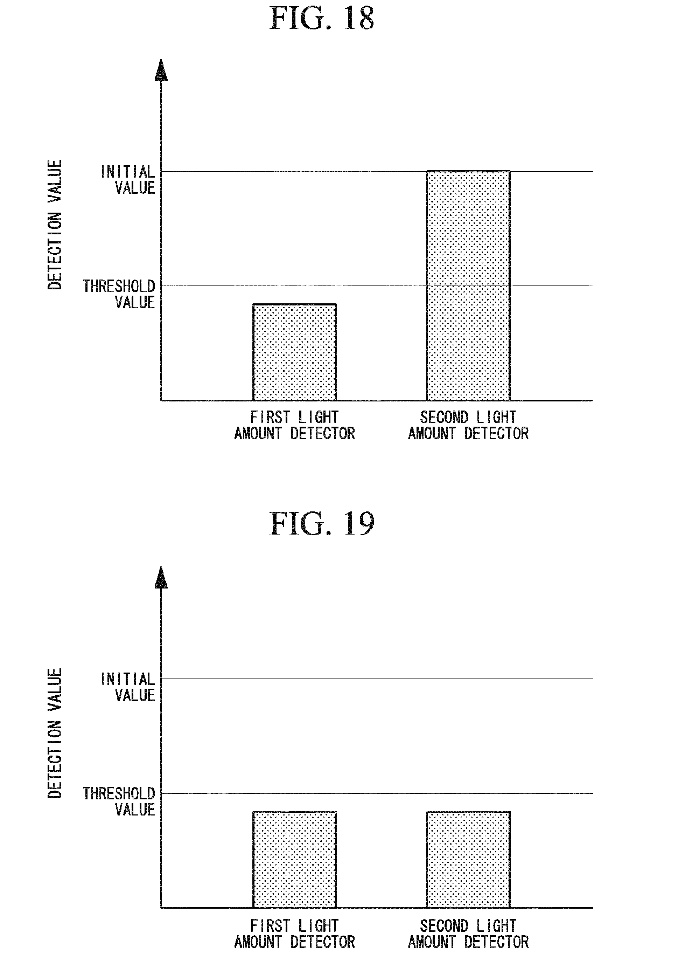

Then, the abnormal internal pressure determining unit 33c first refers to the estimation result relating to the first light amount detector 67 corresponding to the first side surface 52, and determines whether the detection value of the corresponding first light amount detector 67 is equal to or larger than the threshold value (step S 102). Then, when the detection value is larger than the threshold value (NO), that is, the first separation distance W1 is larger than a predetermined value corresponding to the threshold value, the abnormal internal pressure determining unit 33c determines that the internal pressure is normal, and moves the current process to step S 100 so as to perform the process from step S100 again on the basis of the newly received detection signal. Further, when the detection value of the first light amount detector 67 is equal to or larger than the threshold value, that is, the first separation distance W1 is equal to or smaller than the predetermined value corresponding to the threshold value, the abnormal internal pressure determining unit refers to the estimation result relating to the second light amount detector 68, and determines that the detection value of the second light amount detector 68 is equal to or smaller than the threshold value (step S103). Then, when the detection value is larger than the threshold value (NO), that is, the second separation distance W2 is larger than the predetermined value corresponding to the threshold value like the secondary battery 2a shown in FIGS. 17 and 16, the abnormal internal pressure determining unit 33c determines that the internal pressure is normal and moves the current process to step S100 so as to perform the process from step S100 again on the basis of the newly received detection signal. Further, when the detection value of the second light amount detector 68 is equal to or smaller than the threshold value, that is, the second separation distance W2 as well as the first separation distance W1 are equal to or smaller than the predetermined value corresponding to the threshold value like the secondary battery 2b shown in FIGS. 18 and 16, the abnormal internal pressure determining unit determines that the abnormal internal pressure occurs, and outputs the ID of the corresponding secondary battery 2 to the alarm subject output unit 33d (step S104).

Next, the alarm subject output unit 33d outputs the input ID of the secondary battery 2 as a digital signal to the control device 41 (step S105). Then, the control device 41 acquires the ID of the corresponding secondary battery 2 on the basis of the received digital signal, and displays the ID on the display unit 42 so that a user recognizes the abnormal secondary battery 2.

As described above, the BMU 33 sets a threshold value for the first separation distance W1 and the second separation distance W2 which are detected by the first light amount detector 67 and the second light amount detector 68 and monitors the threshold value. Accordingly, the abnormal internal pressure determining unit 33c determines that the abnormal internal pressure occurs when both separation distances are equal to or larger than the threshold value, so that the abnormal internal pressure may be accurately detected without erroneously detecting the expansion of the cell casing 5 with a simple charging and discharging operation as in the first embodiment.

### (Third embodiment)

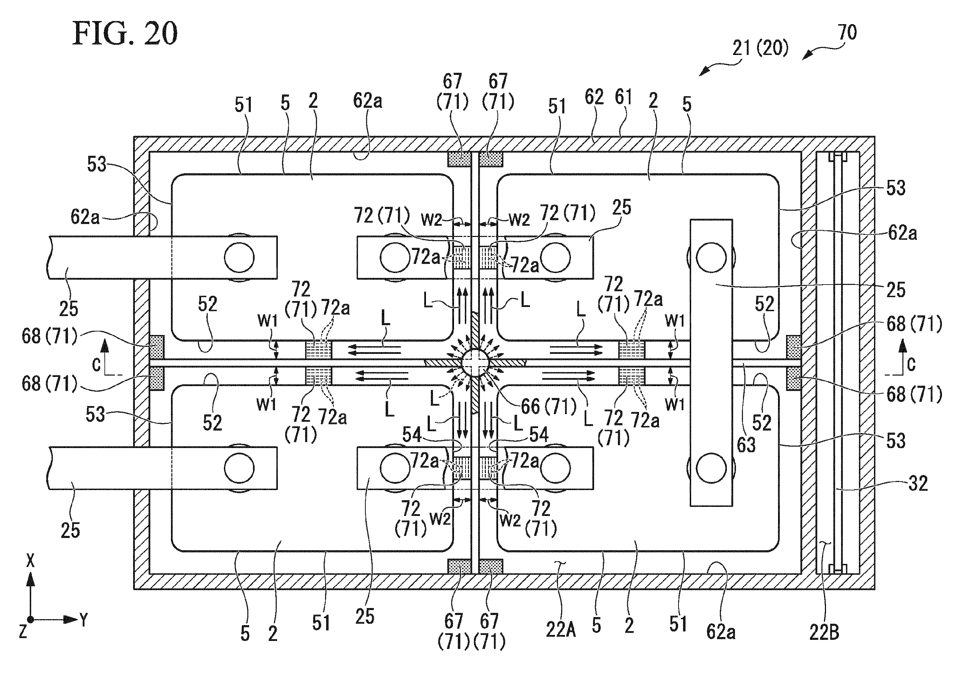

Next, a third embodiment of the present invention will be described. FIGS. 20 to 23 illustrate the third embodiment of the present invention. Furthermore, in the embodiment, the same reference signs will be given to the same constituents as those of the above-described embodiment, and the description thereof will not be repeated.

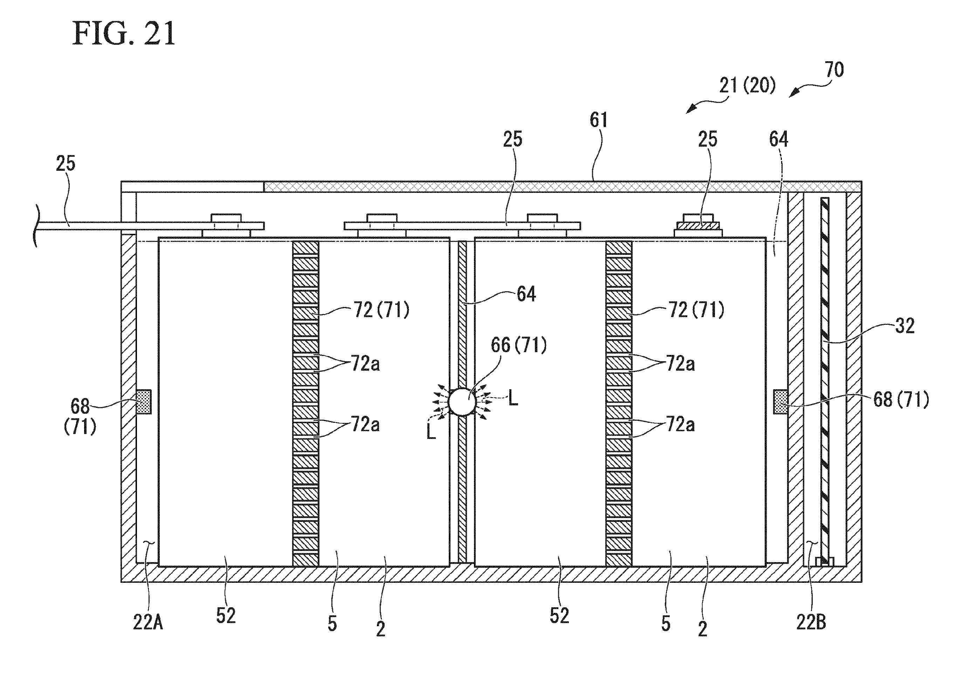

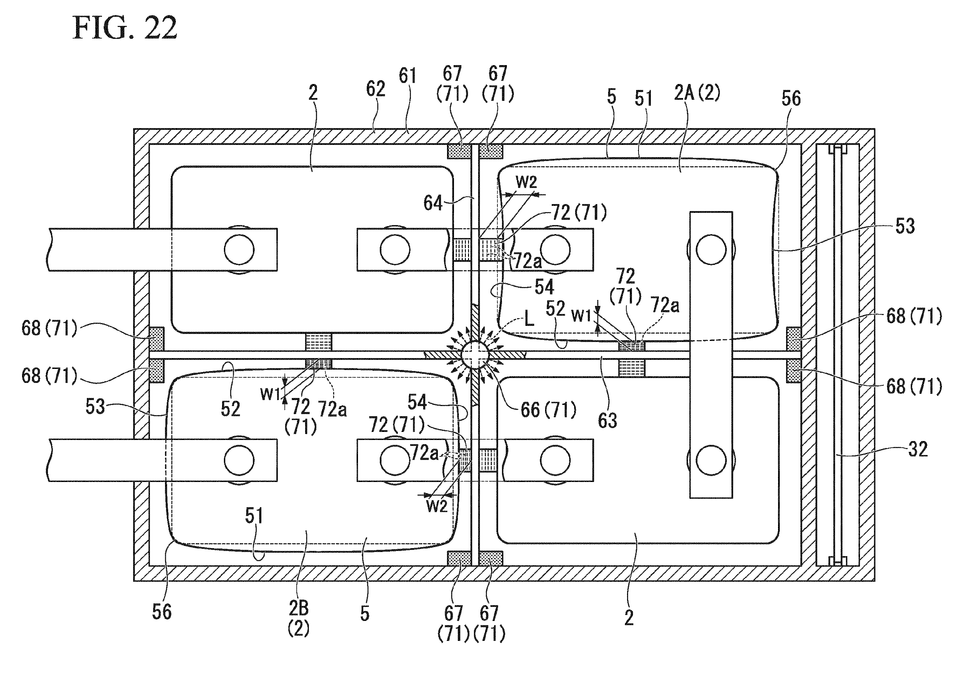

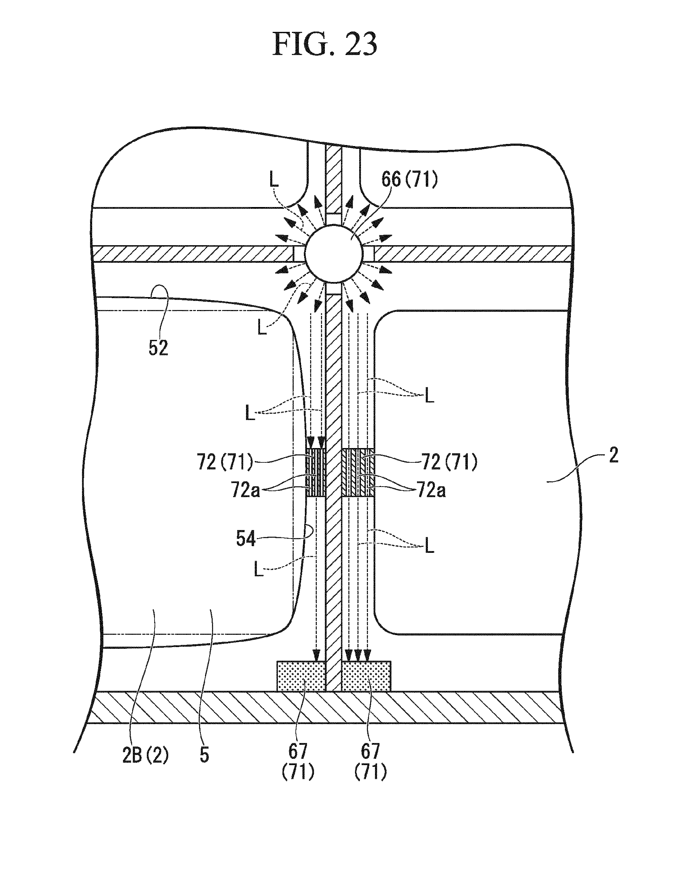

As shown in FIGS. 20 and 21, in a battery system 70 of the embodiment, separation state detecting devices 71 further includes a light-transmissive member 72 which is installed between each of the first side surface 52 and the second side surface 54 of each secondary battery 2 and the battery accommodation casing partition plate wall surface 23a in addition to the light source 66, and the light amount detectors 67 and 68. The light-transmissive member 72 is a member which may elastically contract and expand, and is provided with a void 72a. In the embodiment, the void 72a corresponds to a penetration hole, and is formed along the optical path from the light source 66 to each of the first light amount detector 67 and the second light amount detector 68, so that the detection light L may be transmitted to both sides. Further, the light-transmissive member 72 is disposed throughout the height direction Z at the substantial center of the first side surface 52 or the second side surface 54 of each secondary battery 2. For this reason, the detection light L which is emitted from the light source 66 passes through the void 72a of the light-transmissive member 72, and is radiated to the first light amount detector 67 or the second light amount detector 68, so that the detection light is detected. Here, as shown in FIGS. 22 and 23, when the cell casing 5 expands, so that the separation distance between the cell casing and the battery accommodation casing partition plate wall surface 23a is narrowed, as described above, the optical path width of the detection light L is narrowed, and the light-transmissive member 72 elastically contracts so that the size of the void 72a becomes smaller, which eventually interrupts the detection light L. For this reason, it is possible to detect a change in the separation distance between the cell casing 5 and the battery accommodation casing partition plate wall surface 23 a with high sensitivity. Accordingly, it is possible to determine the expansion state of the cell casing 5 of the secondary battery 2 with higher precision and more accurately determine the occurrence of the abnormal internal pressure.

### (Fourth embodiment)

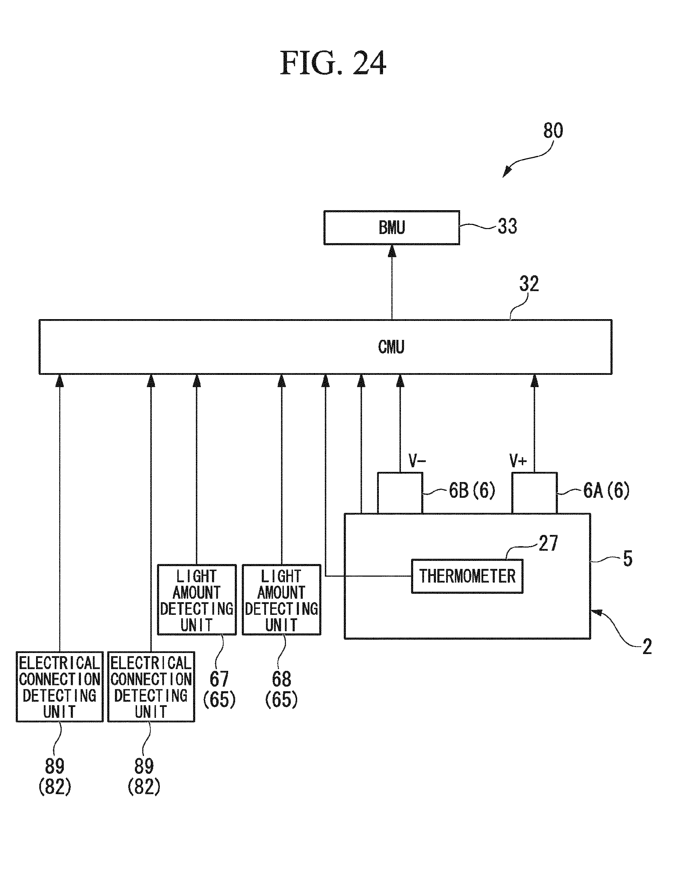

Next, a fourth embodiment of the present invention will be described. FIGS. 24 to 26 illustrate the fourth embodiment of the present invention. Furthermore, in the embodiment, the same reference signs will be given to the same constituents as those of the above-described embodiment, and the description thereof will not be repeated.

As shown in FIG 24, a battery system 80 of the embodiment includes: separation state detecting devices 81 for detecting the separation distance between the cell casing 5 of each secondary battery 2 and the battery accommodation casing wall surface or the battery accommodation casing partition plate and liquid leakage detecting devices 82 for detecting a liquid leakage in each secondary battery 2.
The separation state detecting devices 81 has the same configuration as that of the separation distance detecting devices 71 of the third embodiment in that the light source 66 and the light amount detectors 67 and 68 shown in FIG 20 are provided. However, there is a difference in that a light-transmissive member 83 which is installed between the first side surface 52 and the second side surface 54 of the secondary battery 2 and the battery accommodation casing partition plate wall surface 23a and through which the detection light L from the light source 66 is transmitted toward the light amount detectors 67 and 68 has a different structure.

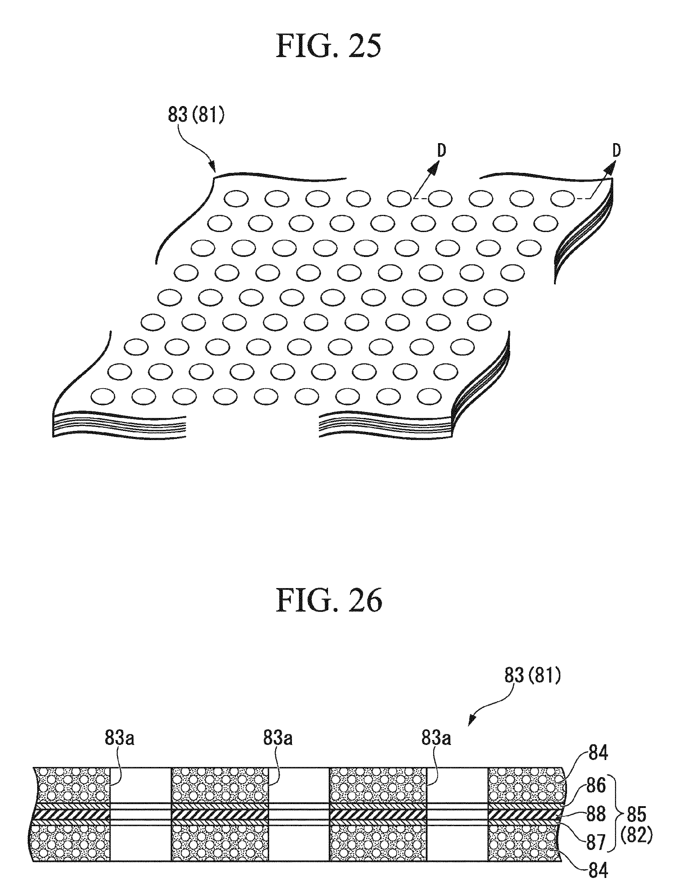

As shown in FIGS. 25 and 26, the light-transmissive member 83 of the embodiment has a multi-layer structure, and includes a pair of elastic portions 84 which is elastically deformable in the thickness direction and an electrode portion 85 which is interposed between the pair of elastic portions 84. The pair of elastic portions 84 is formed as, for example, a porous sheet-like member such as a sponge. Further, the electrode portion 85 includes: a pair of conductive plates 86 and 87 which is formed of a conductive material and an insulating plate 88 which is interposed between the pair of conductive plates 86 and 87 and is formed of an insulating material. For this reason, each of the pair of conductive plates 86 and 87 is maintained so as to be insulated from the other by the insulating plate 88. Further, plural voids 83A are formed in the thickness direction in the pair of elastic portions 84 and are formed in the pair of conductive plates 86 and 87 and the insulating plate 88 constituting the electrode portion 85. Then, since the light-transmissive member 83 is installed between the corresponding side surface and the battery accommodation casing partition plate along the optical path from the light source 66 to each light amount detector in the thickness direction, the detection light L which is emitted from the light source 66 may be detected by the light amount detector after it passes through the void 83A.

Further, the pair of conductive plates 86 and 87 are respectively connected to the conductive detector 89 shown in FIG 24, and hence the conductive detector 89 may determine whether a current flows across the pair of conductive plates 86 and 87. In general, since the insulating plate 88 is interposed between the pair of conductive plates 86 and 87, no current flows across both conductive plates. However, when the electrolyte of the secondary battery 2 leaks and flows into the void 83A, a current flows across the pair of conductive plates 86 and 87 through the inflowing electrolyte, so that it is detected in the conductive detector 89. That is, the liquid leakage detecting devices 82 capable of detecting the liquid leakage of the corresponding secondary battery 2 is formed by using the conductive detector 89 and the electrode portion 85 including the pair of conductive plates 86 and 87 and the insulating plate 88. For this reason, in the battery system 80 of the embodiment, the separation state detecting devices 81 may accurately determine the abnormal internal pressure of the secondary battery 2 and determine abnormal liquid leakage.

While preferred embodiments of the present invention have been described in detail by referring to the drawings, it should be understood that the detailed configuration is not limited to the embodiments and the design may be changed without departing from the spirit of the present invention.

### REFERENCE SIGNS LIST

1: BATTERY SYSTEM
2: SECONDARY BATTERY
3: ELECTRODE PLATE
3A: POSITIVE ELECTRODE PLATE
3B: NEGATIVE ELECTRODE PLATE
3a: POSITIVE ELECTRODE TAB
3b: NEGATIVE ELECTRODE TAB
4: STACKED STRUCTURE
5: CELL CASING
6: ELECTRODE TERMINAL
6A: POSITIVE ELECTRODE TERMINAL
6B: NEGATIVE ELECTRODE TERMINAL
6a: SCREW HOLE
7: SEPARATOR
20: ASSEMBLED BATTERY
21: BATTERY MODULE
22: BATTERY ACCOMMODATION CASING
22A: BATTERY ACCOMMODATING PORTION
22B: SUBSTRATE ACCOMMODATING PORTION
22a: BATTERY ACCOMMODATION CASING WALL SURFACE
23: BATTERY ACCOMMODATION CASING PARTITION PLATE
23a: BATTERY ACCOMMODATION CASING PARTITION PLATE WALL SURFACE
24: SEPARATION STATE DETECTING DEVICES
24a: FIRST PIEZOELECTRIC ELEMENT (SEPARATION STATE DETECTING DEVICES)
24b: SECOND PIEZOELECTRIC ELEMENT (SEPARATION STATE DETECTING DEVICES)
25: BUS-BAR
25a: PENETRATION HOLE
26: FIXATION BOLT
27: TEMPERATURE MEASURING SIDE TERMINAL
28: FIRST VOLTAGE MEASURING SIDE TERMINAL
29: SECOND VOLTAGE MEASURING SIDE TERMINAL
30: BMS
32: CMU
33: BMU
33a: DETECTION SIGNAL ACQUIRING UNIT
33b: SEPARATION DISTANCE ESTIMATING UNIT
33c: ABNORMAL INTERNAL PRESSURE DETERMINING UNIT
33d: ALARM SUBJECT OUTPUT UNIT
40: POWER LOAD
41: CONTROL DEVICE
42: DISPLAY UNIT
51, 52: FIRST SIDE SURFACE
53, 54: SECOND SIDE SURFACE
55: UPPER END SURFACE
56: CORNER PORTION
60: BATTERY SYSTEM
65: SEPARATION STATE DETECTING DEVICES
66: LIGHT SOURCE
67: FIRST LIGHT AMOUNT DETECTOR
68: SECOND LIGHT AMOUNT DETECTOR
70: BATTERY SYSTEM
71: SEPARATION STATE DETECTING DEVICES
72: LIGHT-TRANSMISSIVE MEMBER
72a: VOID
80: BATTERY SYSTEM
81: SEPARATION STATE DETECTING DEVICES
82: LIQUID LEAKAGE DETECTING DEVICES
83: LIGHT-TRANSMISSIVE MEMBER
83a: VOID
84: ELASTIC PORTION
85: ELECTRODE PORTION
86, 87: CONDUCTIVE PLATE
88: INSULATING PLATE
89: CONDUCTIVE DETECTOR
100: HIGH-ORDER SYSTEM

## Claims

1. A battery system comprising:
a substantially box-like battery accommodation casing;
an electrical cell that includes a stacked structure formed by stacking a plurality of electrode plates and a cell casing accommodating the stacked structure and is accommodated in the battery accommodation casing so that at least one of first facing side surfaces of the cell casing in the stacking direction of the stacked structure and at least one of second facing side surfaces in a direction lying at right angles to the stacking direction face the battery accommodation casing wall surface or a battery accommodation casing partition plate;
separation state detecting devices for respectively detecting a first separation distance between the first side surface and the battery accommodation casing wall surface or the battery accommodation casing partition plate facing the first side surface and a second separation distance between the second side surface and the battery accommodation casing wall surface or the battery accommodation casing partition plate facing the second side surface; and
a control unit that determines that the corresponding electrical cell has an abnormal internal pressure when both the first separation distance and the second separation distance become smaller on the basis of the detection result obtained by the separation state detecting devices.

2. The battery system according to Claim 1,
wherein the separation state detecting devices is a piezoelectric element that is interposed between the first and second side surfaces and the battery accommodation casing wall surface or the battery accommodation casing partition plate facing the side surfaces.

3. The battery system according to Claim 2,
wherein the piezoelectric element is attached to the battery accommodation casing wall surface or the battery accommodation casing partition plate.

4. The battery system according to Claim 1,
wherein the separation state detecting devices includes
a light source that allows detection light to pass through a gap formed between the side surfaces and the battery accommodation casing wall surface or the battery accommodation casing partition plate facing the side surfaces from one edge side toward the other edge side in each of the first side surface and the second side surface, and
a light amount detector that is installed at the other edge side of each of the first side surface and the second side surface so as to detect the amount of detection light.

5. The battery system according to Claim 4,
wherein the separation state detecting devices is interposed between the light source and the light amount detector so as to be positioned between the corresponding first side surface or the corresponding second side surface and the battery accommodation casing wall surface or the battery accommodation casing partition plate facing the side surface, and includes a light-transmissive member that has a void through which the detection light is transmitted and is able to elastically contract.
